Europäisches Patentamt

European Patent Office

Office européen des brevets

(11) Publication number: **0 192 482**
A1

# (12) EUROPEAN PATENT APPLICATION

(21) Application number: 86301215.9

(22) Date of filing: 20.02.86

(51) Int. Cl.⁴: **A 01 G 31/00**

(30) Priority: 21.02.85 GB 8504494

(43) Date of publication of application:
27.08.86 Bulletin 86/35

(84) Designated Contracting States:
DE FR GB IT NL

(71) Applicant: NUTRIENT FILM TECHNOLOGY LIMITED
Hook Lane Aldingbourne
Chichester West SussexPO20 6TE(GB)

(72) Inventor: Edwards, Cyril Kenneth
6 Stoughton Close
Oadby Leicestershire(GB)

(74) Representative: Hildyard, Edward Martin
Frank B. Dehn & Co. 39 Old Steine
Brighton BN1 1NH(GB)

(54) Improvements in hydroponic cultivation.

(57) A method of cultivating plants hydroponically by contacting the roots of said plants with a bathing solution containing plant nutrients, characterised in that periodically the concentration of plant nutrients in said bathing solution is increased for a short period and is then reduced to its original value.

EP 0 192 482 A1

**0192482**

19L50226

## "Improvements in hydroponic cultivation"

This invention concerns improvements in hydroponic cultivation and more particularly concerns a method for increasing the nutrient uptake, and hence the growth rate, of plants growing in a hydroponic nutrient medium.

A prime objective of commercial growers is to increase the growth rate of their plants. This is even more desirable in a hydroponic system, where the area available for crops is limited and a considerable capital investment must be made in the equipment.

Many factors limit the growth rate of plants. Two significant factors are the rate at which the root system will take up nutrients, without which no growth can occur, and the rate of photosynthesis. The latter depends, _inter alia_, on the degree of illumination, and falls considerably at the lower light levels prevailing near the beginning and end of the growing season. Thus it would be very desirable to increase the rate at which plants, growing hydroponically, absorb root inputs, and it would also be desirable to improve the photosynthetic efficiency of such plants so that the growth rate was maintained at low light intensities.

Considering first the question of root inputs, a typical nutrient solution for use in hydroponic culture may contain the following quantities of nutrient elements per litre of water:

| Element | Weight (mg) |
| --- | --- |
| Nitrogen | 200 |
| Phosphorus | 60 |
| Potassium | 300 |

| | |
|---|---|
| Calcium | 170 |
| Magnesium | 50 |
| Iron | 12 |
| Manganese | 2 |
| Boron | 0.3 |
| Copper | 0.1 |
| Molybdenum | 0.2 |
| Zinc | 0.1 |
| Total weight of nutrient elements per litre | 794.7 mg |

The relative proportions of the said elements and their total weight per litre of solution may be varied within limits according to grower preference, but the total weight normally lies within a preferred range of 650 to 1200 mg/l. Most species of plants can readily adapt to any constant level of nutrient concentration within this range, but at concentrations higher than 1200 mg/l adaptation problems begin to appear and many plants begin to grow "hard". This is a term growers use to describe plants which are small and dark in appearance and have low transpiration rates and low rates of growth. Consequently, once the elemental weight considered suitable for a particular crop has been chosen it is common practice for this weight to be maintained within close limits over major parts of a crop's life cycle.

It appears that plants have inbuilt mechanisms for controlling the equilibrium level of nutrient salts in their sap. If the salt concentration in the bathing solution is low they will adapt their root structure to support a higher salt differential between the bathing solution and the sap and, conversely, if the salt concentration in the bathing solution is high they will adapt their root structure to support a lower differential between the bathing solution and the sap. For instance, tomato plants

0192482

growing in a bathing solution with 500 mg/l of nutrient salts will tend to have thick roots with 10 or more layers of cells in the root cortex, whilst if they are growing in a bathing solution with, say 1000 mg/l of nutrient salts the root cortex may contain 5 or less layers of cells. Through this process of adaptation the plant can adapt to a range of salt concentrations in the solution bathing its root.

Our current research shows clearly that the equilibrium level which the plants seek to establish is far below that required to support optimal growth. Raising the salt concentration within the bathing solution does little to correct this in that within a wide range of salt concentrations, as has been explained, the plant will adapt its root structure to minimise the change in equilibrium conditions of the nutrient salts in its sap. To attain optimal growth a means has to be found to maintain the salt concentration in the sap at an enhanced level without inhibiting water uptake and without triggering this normal process of adaptation.

When the salt concentration of a bathing solution is suddenly raised there is an initial surge of salt uptake by the plant. We have found that this comes about by the salt finding its way into the free space in the root cortex. The movement of salt from the bathing solution to the free space can take place so quickly that the equivalent of a whole day's salt requirement of a plant can be transferred in a few minutes. Furthermore we have found that if after a few minutes exposure we drain the concentrated solution from the root and re-introduce the original solution, very little of the concentrated solution which was introduced into the free space finds its way back into the

0192482

lower concentration solution. Hence a large proportion of the initial surge of salt uptake is captured by the plant. In practice we prefer to work with concentration differentials which give surges in uptake equivalent to about one-quarter of a normal day's uptake. We can then repeat the process periodically during the day to achieve the total increase in uptake we are seeking.

One of the important features of this novel system of enhancing uptake is that the root meristem continues to be exposed to solution of normal concentration for all but a few minutes each day. This is an important point because the process of adaptation is initiated in the root meristem and we have found that a principal factor in the determination of the ultimate cellular structure of the root is the salt content in the immediate vicinity of the meristem. If this is allowed to rise from the original concentration for only a few short periods each day the higher salt levels during these periods will have little effect on the process of adaptation.

Thus in one aspect our invention provides a method of cultivating plants hydroponically by contacting the roots of said plants with a bathing solution containing plant nutrients, characterised in that periodically the concentration of plant nutrients in said bathing solution is increased for a short period and is then reduced to its original value.

Thus viewed in another aspect, our invention provides a method of increasing uptake of nutrients by a plant grown hydroponically with its root system bathed in a nutrient solution to which it is physiologically adapted, which comprises periodically removing said nutrient solution from said root system and replacing it with a more concentrated solution thereby enhancing the concentration of nutrient salts in the cortical

0192482

free space of said root system, the period of time during which the root meristem is exposed to said more concentrated solution being too short to allow substantial physiological adaption of the root to said more concentrated solution.

It should be noted that our invention is not dependent on any particular theory of plant physiology, but is founded on extensive practical experiment.

We prefer to expose the plant to the higher concentration bathing solution for quite short periods, e.g. in the range one to five minutes. The higher concentration bathing solution is, for example, supplied each day from one to ten times, preferably from one to four times. However, less frequent applications will also have a more limited growth-stimulating effect.

The concentration of said higher concentration solution will vary depending on the type and variety of crop and the other growing conditions, but will generally be 10% to 150% higher than the normal bathing solution in which the plants are growing, more preferably 10 to 50% higher. Mature plants can tolerate and benefit from higher differentials relative to the normal bathing solution, while lower differentials should be used for young plants to avoid any risk of root damage.

It will be understood that the essential feature of this process is an abrupt but brief increase in concentration of one or more nutrients in the bathing solution followed by a return to a lower concentration, the process being repeated many times. Because of the great adaptability of plants to varying conditions, the absolute concentrations which are used may vary over a wide range, and a high concentration for one plant may be equal or lower than the normal concentration for another plant, or even for the same species in different growing conditions.

By continuing to operate this system of differential concentrations over extended periods we have been able to maintain and ultimately to increase the enhanced uptake rates, and have been able to establish that the increase in uptake is reflected in increase in plant growth rate. We believe that this process of differential nutrition enables us to maintain the concentrations of nutrient salts in the sap at levels far above the normal equilibrium levels and that this increase in the nutrient content of the sap enhances nutrient salt consumption by the plant. In the first instance this would appear to take place by ensuring that at no time is the rate of photosynthesis limited by shortage of nutrients, and in the longer term it appears to stimulate the production of chlorophyll in the leave of the plant, thereby increasing the plant's photosynthetic capability.

Thus the two objectives of increasing the uptake of root inputs and increasing the photosynthetic efficiency can be achieved simultaneously. Plants grown by the process of our invention have much higher chlorophyll contents, particularly in the older leaves. They can therefore crop well under the short day/low light conditions prevailing at the end of the growing season.

In practice, we have found that the root does slowly adapt to the more concentrated solution, and to offset this it is desirable periodically to raise the concentration of the normal bathing solution. However, the rate of adaption can be kept to a very low level, such that we can continue to stimulate increased nutrient uptake throughout a long growing season.

In putting our invention into effect, a variety of hydroponic systems may be used. Broadly, our apparatus comprises a source of plant nutrient solution at a first concentration; means for supplying said nutrient solution to the roots of plants; a source of plant nutrient solution at a second higher concentration; and means for periodically supplying said nutrient solution at said second concentration to the roots of said plants, each period not exceeding 30 minutes. Automatic means for periodically supplying the more concentrated nutrient solution may comprise electrically operated valves or the like controlled by any suitable timing means. It is preferred to utilise a so-called nutrient film technique in which the plants are grown in a gully or channel through which bathing solution is circulated. It is important to avoid large amounts of rooting medium, which will take up and store the high concentration bathing solution and prevent accurate dosing of the plants.

It will be understood that the bathing solution may be applied to the roots in any desired way, for example by immersion and/or by spraying.

A particularly preferred hydroponic system is that described in our GB-A-2,113,518 wherein the plants are supported on a dividing wall between two or multiple channels through which nutrient bathing solutions are supplied, portions of the root system being directed into different channels. This "divided gully" apparatus allows very efficient gaseous exchange of the roots, which is highly important to plants which are growing vigorously. Moreover by alternating the bathing solution between different channels, the plants are induced to develop an enhanced degree of cross-linkage in their vascular system. The reader is referred to our aforesaid Specification for a further discussion of the construction, operation and advantages of the divided gully system.

Although in our aforesaid Specification we envisaged periodically using different bathing solutions in the divided gully, we never contemplated suddenly raising the concentration of the bathing solution for a period too short to allow physiological adaption of the roots to take place, and then lowering it again in a repetitive cycle. Thus although the divided gully is ideally suited to implementing the present invention, the latter is a distinct development beyond the concepts described in our aforesaid Specification.

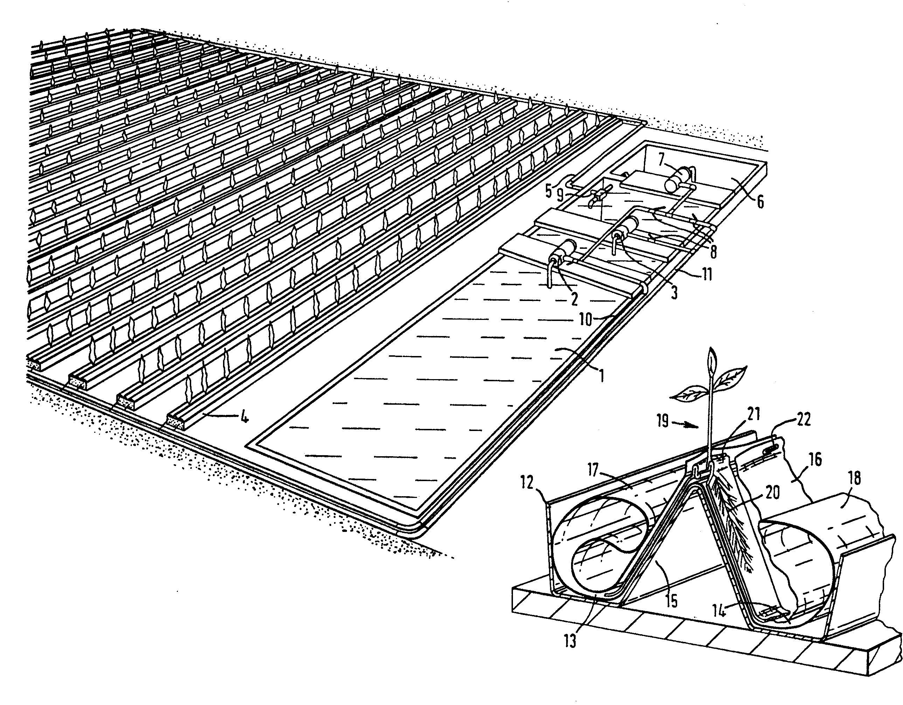

An apparatus according to our invention is illustrated in partial perspective view in the accompanying drawing. A part-sectional view of one of the gullies is shown inset.

The apparatus comprises an array of gullies 4 supplied with normal bathing solution from a nutrient storage tank 1. The gullies each comprise two channels (see inset, more fully described below). One channel of each gully is supplied via pump 2 and conduit 10, and the other channel is supplied via pump 3 and conduit 11. The pumps 2 and 3 are energised alternately so that the supply of bathing solution alternates between the two sides of the gullies in a predetermined cycle, for example every 15 minutes. The solution flows along the gullies to an outlet catchment pipe 5 which returns it to the storage tank.

Adjacent to the nutrient storage tank 1 is a separate tank 6 containing a more highly concentrated nutrient solution. Energisation of pump 7 causes this solution to be supplied to the inlet ends of the gullies via conduits 10 and 11. In operation, the plants are supplied for most of the day with alternating supplies of normal bathing solution of standard strength. Periodically pumps 2 and 3 are switched off, the gullies are allowed to drain, and pump 7 is energised to supply nutrient solution of a high concentration for a short period. A series of one-way valves 8 ensures that there is no mixing of the two solutions.

0192482

During the periods when normal bathing solution is being recirculated, the nutrient return is directed via the two-way valve 9 into the main nutrient tank 1, but during periods when the higher concentration nutrient solution is being recirculated the valve 9 directs the return flow into the tank 6.

As shown inset, the gullies are of the type described in our GB-A-2,113,518. Each gully 12 comprises two channels 13, 14 divided by a central ridge 15. Flexible covering material such as black-pigmented polyethylene 16 extends over the ridge 15 and is formed into rolls 17, 18 in the two channels. A plant 19 is supported on the central ridge 15 with its root system 20 embedded in the hydrophilic sheet material 21, which may e.g. comprise so-called "capillary matting". The sheet material 21 extends to the bottoms of the channels 13 and 14. The free edges of the covering material 16 are attached by clips 22 and resiliently support the plant 19.

Three Examples of our invention will now be described by way of ilustration.

### Example 1

Cucumber plants of the cultivar Farbiola were grown in each of two indentical NFT (nutrient film technique) growing systems, each crop comprising 2,750 plants. Both crops were grown in divided gullies as described in our GB-A-2,113,518 and both had an identical aerial environment. For crop A we used a single nutrient solution with 800 mg of nutrient salts per litre of water, the composition being as given hereinbefore, and alternated the flow between the two channels of the gully every 15 minutes so that one channel was draining whilst the other channel was flowing.

For Crop B we used a similar solution but interrupted the alternating flow pattern once a day between 8 a.m. and 8.30 a.m. During this period we introduced a second solution with 1600 mg of nutrient salts per litre of water (i.e. double the concentration) for one period of 15 minutes on each side of the gully. The second solution was kept separate from the first solution by being held in a separate catchment tank and introduced to the inlet end of the channels via separate pipework and then collected from the outlet end of the channels by separate return pipes. Although the second solution was supplied for 15 minutes to each side of the gully, the period for which it was in contact with any individual plant was much shorter.

The plants were germinated in propagation pockets as described in our GB-A-2,113,518 and were grown throughout as bare-rooted plants. Thus apart from the small amount of capillary matting with which the roots were in contact, there was no rooting medium to shield them from the change in nutrient solution concentration nor to trap quantities of solution and thereby cause mixing of the two nutrient solutions.

The crops in the two systems were grown on to obtain four weeks of harvesting. The yield from Crop B was 48% greater than that from Crop A in terms of number of fruit harvested and 54% greater in terms of weight of fruit harvested. The increase in salt uptake over the life of the crop was 49% and in water consumption 32%.

When the crops were discontinued, sample plants were checked for root and shoot weight. The average weight of the plants from Crop A was 5.938 kg and from Crop B 7.145 kg. Hence the differential nutrition system had induced the plants from Crop B to increase their salt uptake by 49%, their water uptake by 32%, and had increased fruit yield by 54% and the vegetative growth by only 17%.

## Example 2

In a second experiment we grew two plots each containing 24 tomato plants of the cultivar Sonatine. These plants were germinated and grown on in propagation pockets and planted out in divided channels as described in Example 1. The experiments were run in a controlled environment unit using artificial illumination with an average irradiance of 33 watts per square metre for 12 hours a day. Plot A had a single nutrient solution with 900 mg nutrient salts per litre of water. Plot B had two nutrient solutions available to it. The first solution flowed for 22½ hours a day and had a starting concentration of 900 mg per litre. The concentration of this solution was raised each week by 100 mg per litre until it reached a concentration of 2000 mg per litre. The second solution flowed for three half-hour periods each day from 8 a.m. to 8.30 a.m., from 11 a.m. to 11.30 a.m., and from 2 p.m. to 2.30 p.m., and was adjusted each week to maintain a nutrient concentration of 800 mg per litre in excess of the first solution.

The results at the end of 18 weeks were as follows:

| | Chlorophyll content MG/cm$^2$ | | Uptake per plant/day | | Fruit yield |
| | Young leaves | Old leaves | Water (litres) | Nutrient Elements (mgs) | lbs/plant/ week |
|---|---|---|---|---|---|
| Plot A | 37.0 | 16.4 | 0.68 | 408 | 0.53 |
| Plot B | 57.0 | 50.5 | 1.17 | 760 | 1.16 |

The results show clearly that the increases in nutrient and water uptake initially observed are sustainable and result in proportionate increases in yield. The running yield from Plot B is extremely high for the low light levels in which the plants were grown. It suggests that a yield in excess of 200 tons an acre is possible in the radiation conditions experienced by a long season crop in southern England. As can be seen, this can partly be explained by the increased photosynthetic capability of the young leaves and partly by the retention of photosynthetic capability of the older leaves. It is also apparent that the process of differential nutrient markedly delays the onset of senescence both in root and leaf tissue and improves fruit quality.

Clearly during the experiment the plants adapted to the increasing nutrient solution concentrations. They were able to maintain the enhanced nutrition and water uptake levels at nutrient concentrations which in a conventional single solution system would have markedly inhibited growth. The plants showed no signs of growing "hard". Thus the novel growing conditions not merely stimulated more vigorous and fruitful growth, but also induced a mode of adaptation which is consistent with sustained vigour and fruitfulness.

### Example 3

In a third experiment we again used two plots of 24 tomato plants and repeated the conditions described in Example 2 except that we held each of the nutrient solutions at a constant concentration during the whole of the growing season of 19 weeks. We selected a concentration of 900 mg/l of nutrient salts for the first solution and 1200 mg/l of nutrient salts for the second solution.

The results were as follows :

0192482

|  | Uptake per plant/day | | Fruit yield |
|  | Water (litres) | Nutrient Elements (mgs) | lbs/plant/ week |
| --- | --- | --- | --- |
| Plot A (control) | 0.56 | 392 | 0.22 |
| Plot B | 1.02 | 597 | 0.47 |

This experiment was conducted 7 months after that described in Example 2 and the results follow a very similar pattern. The fact that we were able to maintain the enhanced uptake over a period as long as 19 weeks without having to increase the salt content of the more concentrated solution is very significant. It clearly indicates that by restricting the time when the meristem is exposed to the more concentrated solution the process of adaption has been substantially curtailed.

Claims

1. A method of cultivating plants hydroponically by contacting the roots of said plants with a bathing solution containing plant nutrients, characterised in that periodically the concentration of plant nutrients in said bathing solution is increased for a short period and is then reduced to its original value.

2. The method of claim 1 wherein the concentration of plant nutrients in said bathing solution is increased by from 10 to 150%.

3. The method of claim 2 wherein said increase is in the range from 10 to 50%.

4. The method of any of the preceding claims wherein said short period is in the range from 1 to 30 minutes.

5. The method of claim 4 wherein said short period is in the range from 1 to 5 minutes.

6. The method of any of the preceding claims wherein the concentration of plant nutrients in said bathing solution is increased from one to ten times per day.

7. The method of claim 6 wherein the concentration of plant nutrients in said bathing solution is increased from one to four times per day.

8. The method of any of the preceding claims wherein said plants are grown in a gully or channel through which said bathing solution is circulated.

9. The method of claim 8 wherein plants are grown on a dividing wall between two or multiple channels through which nutrient bathing solutions are supplied, portions of the root system being directed into different channels.

10. A method of claim 1 for increasing uptake of nutrients by a plant grown hydroponically with its root system bathed in a nutrient solution to which it is physiologically adapted, which comprises

0192482

periodically removing said nutrient solution from said root system and replacing it with a more concentrated solution thereby enhancing the concentration of nutrient salts in the cortical free space of said root system, the period of time during which the root meristem is exposed to said more concentrated solution being too short to allow substantial physiological adaption of the root to said more concentrated solution.

11. The method of claim 10 wherein said period of time is in the range of 1 to 30 minutes, preferably from 1 to 5 minutes.

12 Apparatus for performing the method of claim 1 or 10, comprising a source of plant nutrient solution at a first concentration; means for supplying said nutrient solution to the roots of plants; a source of plant nutrient solution at a second higher concentration; and means for periodically supplying said nutrient solution at said second concentration to the roots of said plants, each period not exceeding 30 minutes.

13. The apparatus of claim 10 including a gully or channel through which the bathing solutions may be circulated.

14. The apparatus of claim 13 including two or multiple channels through which the bathing solutions may be circulated, and dividing walls between said channels on which plants may be supported.

0192482

1 / 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2 102 263 (KYOWA) <br> * Whole document * <br><br> --- | 1 | A 01 G 31/00 |
| A | GB-A-2 042 491 (CHARNOE) <br> * Page 2, lines 38-122; figures 1-3 * <br><br> ----- | 1 | |

| | TECHNICAL FIELDS SEARCHED (Int. Cl.4) |
|---|---|
| | A 01 G |

The present search report has been drawn up for all claims

| Place of search | Date of completion of the search | Examiner |
|---|---|---|
| THE HAGUE | 23-05-1986 | HERYGERS J.J. |